# EUROPEAN PATENT APPLICATION

(11) **EP 2 128 776 A1**
(43) Date of publication of application: **02.12.2009**
(21) Application number: 08009554.0
(22) Date of filing: 26.05.2008
(51) Int. Cl.: G06F 17/30

(54) **Method, search platform and user device for generating search results**

(71) Applicant: Vodafone Holding GmbH, 40213 Düsseldorf (DE)
(72) Inventor: Clavin, Neil, 40211 Düsseldorf (DE); Leon, German, 40219 Düsseldorf (DE); Knight, John, WD3 8ND, Herts (GB)
(74) Representative: Jostarndt, Hans-Dieter

(57) **Abstract**

The invention relates to a method for generating search results from an index of a content store, wherein the content store contains a plurality of content items, wherein a search of a content store index is performed in accordance with user search terms and wherein the search is furthermore Influenced by meta information, said meta information comprising at least one of device, user and context specific information in order to generate a selection of search terms for a display at the graphical user interface of the user equipment.

The invention is **characterized in that** the meta information is utilized for automatically generating a selection of search terms and that the selection of search terms is transmitted to a user equipment which is associated to the user.

The invention furthermore relates to a search platform and a user equipment for carrying out the method.

## Description

### Technical field

The present invention relates to a method and a device for facilitating computer based searches.

### Background of the invention

Today there is an increasing number of digital communication devices which are capable of accessing search engines, Examples of these digital communication devices are personal digital assistant devices (PDA), portable computers, mobile telephones, palmtop computers, etc.

It is known to adapt search engines according to user preferences by installing a search platform.

Such a search platform is described in the international patent application with the international publication number WO 2007/080413 A1. This document discloses a method for generating search results from an index of a content store containing a plurality of content items over a wireless telecommunications connection. Each content item has corresponding meta information associated therewith. The meta information comprises at least one of device, subscriber and context specific information. This method includes: receiving a search request message from a user using a mobile device, the search request message including user search terms.

Furthermore this method comprises obtaining contextual data representative of the mobile device, user subscription and network capability. This method comprises: initiating a search of the content store index in accordance with the user search terms. Furthermore this method comprises: determining, for at least one of the user search terms, whether there exists one or more correlated index. This method comprises: entry in the content store index; and where a correlation exists, generating search results, the results of the search including respective links to correlated content items ranked in accordance with contextual data.

This known search platform can be adapted to tailor the results of a search to a particular subscriber.

Due to this filtering, results representing a content items that a most suitable for the subscriber- for example the user of the mobile user equipment- can be presented while minimizing the risks of delivering unwanted content.

### Summary of the invention

It is desirable to further improve the adoption to a particular user. The present invention proposes a method for generating search results from an index of a content store according to claim 1. The invention further proposes a search platform according to claim 8 and a user equipment according to claim 10.

Advantageous embodiments of the invention are described in the invention disclosure and are furthermore contained In the dependent claims.

The current invention relates to a method for generating search results from an index of a content store, wherein the content store contains a plurality of content items, wherein a search of a content store index is performed in accordance with user search terms and wherein the search is furthermore influenced by meta information, set meta information comprising at least one of device, user and context specific information in order to generate a selection of search terms for a display at the graphical user interface of the user equipment.

According to the invention the meta information is utilized for automatically generating a selection of search terms, This selection of search terms is transmitted to a user equipment which is associated to the user.

An advantage of this method is that it allows the user to organize search terms for carrying out searches. The invention is a pre-selection according to the meta information can be performed. This has the further advantage that before performing the search a reduction of the content items to be searched is realized, This further accelerates the search and minimizes a data exchanges.

According to a preferred embodiment of the method, the search platform and the user equipment, graphical elements for the search terms are generated, wherein the graphical elements are associated to the corresponding search terms. According to a preferred embodiment of this implementation the graphical element activates a hyperlink which activates a search in the content store with regard to the corresponding search term.

According to a preferred embodiment of the method, the search platform and the user equipment a probability, that a search term would be of interest for the user is calculated. In a preferred embodiment the probability influences the generation of the selection of search terms that is transmitted to the user equipment.

According to a preferred embodiment of the invention the probability that a search term would be of interest for the user influences the arrangement and/or the size of the graphical elements associated to the corresponding search terms.

This embodiment further facilitates a navigation of the user through search terms which might be of interest to him.

Various graphical elements are useful as graphical elements for the representation of the search terms. For example it is possible to present the search terms themselves or a graphical modification of search terms. Especially graphical modifications which are capable of increasing the visibility of the search terms are useful. For example it is advantageous to put search terms with a high probability in a foreground. Additionally it is possible to display such a search term in bigger letters, in a certain colour or highlighted with other graphical effects as for example bowled types.

Alternatively it is possible to use further improvements of the graphical elements. For example it is possible, to display as a search term for restaurants with crossed cutlery.

The user may be any person which is capable of accessing the user equipment. Preferences of the user for carrying out searches are for example stored as it is known from the state of the art, especially known from the above mentioned international patent application with international publication number WO 2007/080413 A1. However, alternative solutions are also included in the scope of the invention.

For example it is possible to design the search platform within alternative concepts. For example the search platform can be integrated into the search engine host. Alternatively it is however possible, that the search platform is a logical node in a communications network, for example a host within the internet or an intranet. Furthermore it is possible that the search platform is integrated into any logical node or switch of a telecommunication network.

The current invention relates to a search platform which is capable of generating search results from an index of a content store.

Generating the search results from the index of the content store can be carried out in different ways. For example it is possible to utilize a search path to an external search engine host as it is described in the international patent application with international publication number WO 2007/080413 A1 or that search engine host itself contains a search platform as it is described in WO 2007/080413 A1, For those skilled in the art, it is obvious that various implementations of search platforms can be derived from WO 2007/080413 A1.

The content store contains a plurality of content items, wherein a search of a content store index is performed in accordance with user search terms and wherein the search is furthermore influenced by meta information, said meta information comprising at least one of device, user and context specific information.

The invention furthermore proposes a search platform with means for generating search results from an index of a content store, wherein the content store contains a plurality of content items, wherein the search platform is connectable to a storage device for meta information.

Advantageously the search platform is capable of initiating a generation of a selection of search terms with regard to the meta information.

In a preferred embodiment the content store for the meta information contains information about at least one previous search of the user,

Though the current invention is not limited to users which are subscribers to a telecommunication network, such use scenarios are object of a preferred embodiment of the invention.

This embodiment has the advantage that an integration of the advantages of WO 2007/080413 A1 can be carried out with a usage of the infrastructure described in that patent application.

It is especially advantageous to combine the functionalities of WO 2007/080413 A1 including a usage of adoptable filters, intelligent crawling solutions and the other functions described in this document with the presentation recommended search terms according to the invention.

Preferred embodiments of the invention allow the user to organize potentially interesting search terms. This can for example be carried out by organizing the search terms into different categories and facilitate navigation through the search terms.

It has been found to be advantageous if the method further comprises the step of generating the graphical elements as fractal structures, Fractal structures do not change their appearance independent of their size. This property is very useful if the size of the graphical elements has to be adapted as a function of the number of the graphical elements to be displayed.

Consequently, in an embodiment of the present invention the method further comprises the step of adapting the size of the graphical elements as a function of the number of graphical elements to be displayed.

It has been found to be useful to position the graphical elements as a function of the frequency of carrying out a search with a utilization of a search term. In this case the invention can be developed such that the method further comprises the step of positioning the most frequently selected graphical elements in the main viewing direction of the user.

In an advantageous embodiment of the present invention the method further comprises the step of dynamically rearranging the search terms as a function of current time and/or as a function of different weekdays. For the user of the relevance or importance of different kinds of search terms may change during the day as well as in dependence of what kind of day it is such as weekend or working day. This embodiment enables the user to have always the most relevant search terms easily accessible independent whether he is at work or at leisure.

Also further embodiments of the invention relate to a distinction between certain circumstances which could influence a probability that a search term would be of interest to the user.

Preferred embodiments of the invention may include search terms which are automatically generated using an evaluation of searches a user has carried out and/or with an integration of at least one of the aspects of the meta information.

For example may a search carried out at a work time of the user limit hotels to those hotels which are included in a list of travelling guide lines of the employer of the user, for example to those hotels which are part of a company agreement between the hotel respectively the hotel chain and the employer of the user.

A search carried out at leisure time may include further preferences of the user, as for example hotels with sports facility, fads facilities or with wellness facilities.

Embodiments of the invention include the case that different search terms can - even if they relate to each other - be displayed with different size.

For example the search term hotel may be displayed bigger than the search term "hotels according to travelling guide lines", For those skilled in the art, it is obvious that search terms can have different logical functions, especially that the search must include the word that the search result should contain the search term and/or another search term or that the search should not contain the search term.

Those skilled in the art would adept the corresponding logical functions in order to adept the generation of search terms to be displayed at the user equipment in accordance with the meta information.

According to a further aspect, the present invention suggests a device comprising processing means provided for executing the method described in this patent application.

In a specific embodiment the device is a mobile communication device.

### Brief description of the drawings

Fig. 1 shows schematically a mobile user equipment with a graphical user interface displaying search terms according to the invention.
Fig. 2 shows schematically the mobile user equipment shown in fig. 1 with an alternative representation of the search terms according to the invention.

### Detailed description of embodiments of the Invention

Reference in this application to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

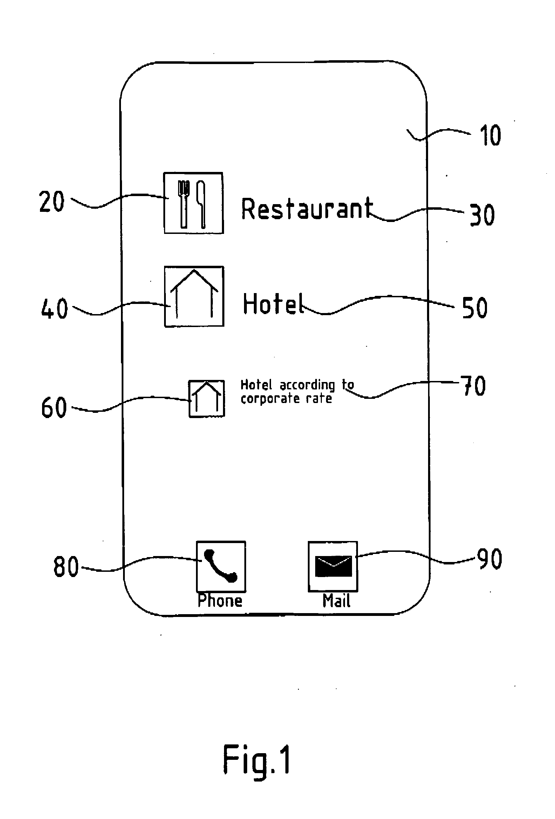

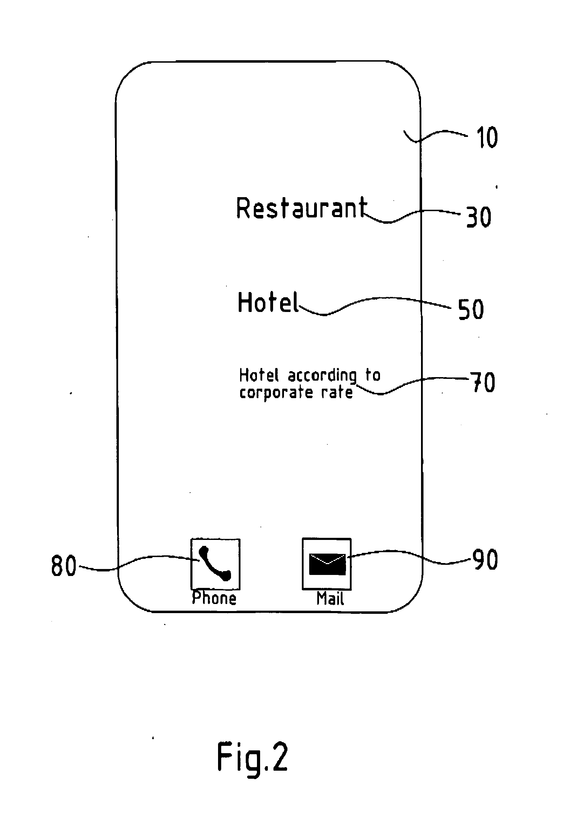

Figure 1 and figure 2 illustrate the organization of search terms of a communication device which is not shown in its entirety in figure 1 for the sake of simplicity.

Figure 1 shows a communication device according to the invention with graphical elements 20, 30, 40, 50, 60, 70 representing search terms which are automatically generated and displayed at the communication device (user equipment) 10.

Fig. 2 shows an embodiment, wherein the graphical elements 30, 50, 70 directly represent the corresponding search terms.

The communication device is connected via wireless or wired networks with a search platform. The search platform is for example carried out as the search platform in WO 2007/080413 A1, potentially in connection with the external search engine host described in that application, The document WO 2007/080413 A1 and all of its embodiments are included into this application text with full reference. It is especially useful that the search platform contains one or more of the functions described in that patent application. For those skilled in the art it is obvious that the reference to this document may be suspect able to various modifications and alternative forms including the specific embodiments which has been shown by way of example in that patent application and described in detail therein. However it should be understood that the invention is not intended to be limited to the particular forms disclosed in that application. Rather the reference to that invention is to cover all modifications, equivalence and alternatives falling with in the spirit and scope of that invention.

The communication device displayed in figure 1 is an example of a user equipment according to the invention. The communication device is capable of receiving search terms and to display the search terms and/or a graphical information at a graphical user interface.

The mobile user equipment is capable of enabling a method for generating search results from an index of a content store, wherein the content store contains a plurality of content items.

Advantageously a search of a content store index is performed in accordance with user search terms, wherein the search is furthermore influenced by the meta information.

Said meta information comprising at least one of device, user and context specific information in order to generate a selection of search terms for a display at the graphical user interface of the user equipment.

The meta information is utilized for automatically generating a selection of search terms. This selection of search terms is transmitted to the user equipment 10 which is associated to the user.

Preferably the graphical elements can be pretend by the user, for example by deleting, enlarging, minimizing or delaying this advantageously allows the user to organize search terms for carrying out searches. The invention is a pre selection according to the meta information can be performed. This has the further advantage that before performing the search a reduction of the content items to be searched is realized, This further accelerates the search and minimizes a data exchanges.

The graphical elements 20, 30, 40, 50, 60, 70 are associated to the corresponding search terms.

According to a preferred embodiment of this implementation the graphical element activates a hyperlink which activates a search in the content store with regard to the corresponding search term.

In a preferred embodiment of the invention a probability that a search term would be of interest for the user is calculated and utilized for the selection of search terms and/or for influencing the arrangement and/or size of the graphical elements associated to the corresponding search terms.

This embodiment further facilitates a navigation of the user through search terms which might be of interest to him.

Various graphical elements are useful as graphical elements for the representation of the search terms. For example it is possible to present the search terms themselves or a graphical modification of search terms. Especially graphical modifications witch are capable of increasing the visibility of the search terms are useful. For example it is advantageous to put search terms with a high probability in a foreground. Additionally it is possible to display such a search term in bigger letters, in a certain colour or highlighted with other graphical effects as for example bowled types.

Alternatively it is possible to use further improvements of the graphical elements. For example it is possible, to display a search term for restaurants with crossed cutlery.

The user may be any person which is capable of accessing the user equipment. Preferences of the user for carrying out searches are for example stored as it is known from the state of the art, especially known from the above mentioned international patent application with international publication number WO 2007/080413 A1. However, alternative solutions are also included in the scope of the invention.

For example it is possible to design the search platform within alternative concepts. For example the search platform can be integrated into the search engine host.

Alternatively it is however possible, that the search platform is a logical node in a communications network, for example a host within the internet or an intranet. Furthermore it is possible that the search platform is integrated into any logical node or switch of a telecommunication network.

Concerning the search platform, the international patent application with international publication number WO 2007/080413 A1 is included as reference.

Generating the search results from the index of the content store can be carried out in different ways. For example it is possible to utilize a search path to an external search engine host as it is described in the international patent application with international publication number WO 2007/080413 A1 or that search engine host itself contains a search platform as it is described in WO 2007/080413 A1. For those skilled in the art, it is obvious that various implementations of search platforms can be derived from WO 2007/080413 A1.

The content store contains a plurality of content items, wherein a search of a content store index is performed in accordance with user search terms and wherein the search is furthermore influenced by meta information, said meta information comprising at least one of device, user and context specific information.

Though the current invention is not limited to users which are subscribers to a telecommunication network, such use scenarios are object of a preferred embodiment of the invention.

This embodiment has the advantage that an integration of the advantages of WO 2007/080413 A1 can be carried out with a usage of the infrastructure described in that patent application.

It is especially advantageous to combine the functionalities of WO 2007/080413 A1 including a usage of adoptable filters, intelligent crawling solutions and the other functions described in this document with the presentation recommended search terms according to the invention.

Furthermore a preferred embodiment of the invention includes a time, and/or a location (especially the location of the user equipment), history information (especially information about already used searched terms). For example a search for restaurants could include additional geographical information, for example about the position of the user equipment In this case it is for example possible to perform a ranking of potentially interesting restaurants with regard to a distance from the user equipment.

Alternatively and/or additionally it is possible to integrate stored preferences of the user as meta information. For example a preference of the user for a certain style of cooking, for example Indian style or Mexican style can be into account for generating the search terms and/or for evaluating the search terms.

The invention includes the case that the search terms are based on the meta information as well as the case that the search terms are interpreted with regard to the meta information.

Preferred embodiments of the invention allow the user to organize potentially interesting search terms. This can for example be carried out by organizing the search terms into different categories and facilitate a navigation through the search terms.

It has been found to be advantageous if the method further comprises the step of generating the graphical elements as fractal structures. Fractal structures do not change their appearance independent of their size. This property is very useful if the size of the graphical elements has to be adapted as a function of the number of the graphical elements to be displayed.

Consequently, in an embodiment of the present invention the method further comprises the step of adapting the size of the graphical elements as a function of the number of graphical elements to be displayed.

It has been found to be useful to position the graphical elements as a function of the frequency of carrying out a search with a utilization of a search term. In this case the invention can be developed such that the method further comprises the step of positioning the most frequently selected graphical elements in the main viewing direction of the user.

In an advantageous embodiment of the present invention the method further comprises the step of dynamically rearranging the search terms as a function of current time and/or as a function of different weekdays. For the user of the relevance or importance of different kinds of search terms may change during the day as well as in dependence of what kind of day it Is such as weekend or working day, This embodiment enables the user to always have the most relevant search terms easily accessible independent whether he is at work or at leisure.

Also further embodiments of the invention relate to a distinction between certain circumstances which could influence a probability that a search term would be of interest to the user.

Preferred embodiments of the invention may include search terms which are automatically generated using an evaluation of searches a user has carried out and/or with an integration of at least one of the aspects of the meta information.

For example may a search carried out at a work time of the user limit hotels to those hotels which are included in a list of travelling guide lines of the employer of the user, for example to those hotels which are part of a company agreement between the hotel respectively the hotel chain and the employer of the user.

A search carried out at leisure time may include further preferences of the user, as for example hotels with sports facility, fads facilities or with wellness facilities.

Embodiments of the invention include the case that different search terms can - even if they relate to each other - be displayed with different size.

For example the search term hotel may be displayed bigger than the search term "hotels according to travelling guide lines". For those skilled in the art, it is obvious that search terms can have different logical functions, especially that the search must include the word that the search result should contain the search term and/or another search term or that the search should not contain the search term.

A directory containing the meta information may be stored in a memory of the device but preferably the directory is stored on a server of a network provider such that only a link to a specific contact or communication item is stored in the device. This is particularly advantageous for mobile devices having limitations with regard to the size of the available memory as well as their energy consumption because storing a link and downloading a file is less energy consuming than downloading a potentially big file associated with the communication item. In particular during travels it is inconvenient for users if their communication device is running out of energy and becomes inoperative. In the same way it is disturbing for a user if his communication device runs out of memory. Similarly, all calculations which are necessary for a new arrangement of the icons are preferably made on a server of a network provider. However, it is also possible that the local microprocessor of the communication device performs the calculations though this consumes in general more energy than downloading the results of the calculation from the server.

The user has a possibility to link a search term with other information or documents, Linked information may include further search terms. In principle there is no limitation for the number of meta information and/or search terms. However, there are practical limitations determined by individual preferences or requirements.

The shape of some of the graphical elements 20, 30, 40, 50, 60 and 70 is shown as simple rectangular icons. However, the shape of the graphical elements 20, 30, 40, 50, 60 and 70 is not limited to rectangular shapes and the graphical elements 20, 30, 40, 50, 60 and 70 may take any other geometrical form.

According to a preferred embodiment of the invention at least some of the graphical elements 20, 30, 40, 50,60 and 70 are designed as icons. Specifically, the icons may have different appearances if they are associated with different kinds of contacts or contents. This feature facilitates and accelerates the search of the user for a specific item. In addition to different shapes also different colours or textures provide further information to distinguish icons related to different contacts or contents. In a specific embodiment of the invention all icons have a fractal design.

In a preferred embodiment of the invention all pictures icons information files data connections and so on are provided to the communication device via a network connection. They are not stored locally on the device. This is advantageous in view of the energy consumption of the device and also there is practically no limitation with regard to the availability of memory size.

## Claims

1. Method for generating search results from an index of a content store, wherein the content store contains a plurality of content items, wherein a search of a content store index is performed in accordance with user search terms and wherein the search is furthermore influenced by meta information, said meta information comprising at least one of device, user and context specific information in order to generate a selection of search terms for a display at the graphical user interface of the user equipment (10),
**characterized in,**
**that** the meta information is utilized for automatically generating a selection of search terms and that the selection of search terms is transmitted to a user equipment (10) which is associated to the user.

2. The method according to claim 1,
**characterized in,**
**that** graphical elements (20, 30, 40, 50, 60, 70) for the search terms are generated, wherein the graphical elements (20, 30, 40, 50, 60, 70) are associated to the corresponding search terms.

3. The method according to claim 2
**characterized in,**
**that** the graphical element activates a hyperlink which activates a search in the content store with regard to the corresponding search term.

4. The method according to any of the preceding claims,
**characterized in,**
**that** a probability, that a search term would be of interest for the user is calculated.

5. The method according to any of the preceding claims,
**characterized in,**
**that** the probability influences the generation of the selection of search terms that is transmitted to the user equipment (10).

6. The method according to claim 4 or claim 5,
**characterized in,**
**that** the probability influences an order of the graphical elements (20, 30, 40, 50, 60, 70) at the user equipment (10).

7. The method according to any of the claims 4 to 6,
**characterized in,**
**that** the probability influences an accentuation of the graphical elements (20, 30, 40, 50, 60, 70) at the user equipment (10).

8. Search platform with means for generating search results from an index of a
content store, wherein the content store contains a plurality of content items, wherein the search platform is connectable to a storage device for meta information,
**characterized in,**
**that** the search platform is capable of initiating a generation of a selection of search terms with regard to the meta information.

9. The search platform according to claim 8,
**characterized in,**
**that** the content store for the meta information contains information about at least one previous search of the user.

10. User equipment (10), capable of communicating in a communication network,
**characterized in,**
**that** it comprises processing means provided for executing the method according to any of the claims 1 to 7.
